# EUROPEAN PATENT APPLICATION

(11) **EP 4 549 862 A1**
(43) Date of publication of application: **07.05.2025**
(21) Application number: 24209354.0
(22) Date of filing: 29.10.2024
(51) Int. Cl.: F26B 13/10, F26B 21/00, H01M 4/04

(54) **GAS INJECTION NOZZLE FOR DRYING ELECTRODE PLATE AND DRYING APPARATUS FOR ELECTRODE PLATE INCLUDING THE SAME**

(30) Priority: 02.11.2023 KR 20230150266
(71) Applicant: SK Innovation Co., Ltd., Seoul 03188 (KR); SK On Co., Ltd., Seoul 03161 (KR)
(72) Inventor: LEE, Jun Young, 34124 Daejeon (KR); KIM, Dae Hee, 34124 Daejeon (KR)
(74) Representative: Prüfer & Partner mbB Patentanwälte · Rechtsanwälte

(57) **Abstract**

The present disclosure provides a gas injection nozzle (100) for drying an electrode plate including: a nozzle body (110) having a flow space (120) through which drying gas flows, the flow space being formed between a first plate (111) and a second plate (112) spaced apart from the first plate (111) in a first direction; at least one inlet hole (130) formed in the first plate (111) and configured to allow the drying gas to flow into the flow space (120) from the outside of the nozzle body (110); and a plurality of injection holes (140) formed in the second plate (112) and configured to inject the drying gas from inside of the flow space (120) to the outside, wherein the at least one inlet hole (130) has a slit shape crossing the first plate (111) in a second direction, a longitudinal direction of the nozzle body (110).

## Description

### TECHNICAL FIELD

The disclosure and implementations disclosed in this patent document generally relate to a gas injection nozzle used to dry an electrode plate and a drying apparatus for the electrode plate including the same. The gas injection nozzle and the electrode plate manufactured by the drying apparatus for the electrode plate including the same in the present disclosure may be widely applied in the field of secondary battery technology, such as pouch-type secondary batteries and square-shaped secondary batteries.

### BACKGROUND

A secondary battery cell is capable of being charged and discharged unlike primary batteries, and may be applied to devices within various fields such as a digital camera, a mobile phone, a laptop computer, a hybrid vehicle, an electric vehicle, and an energy storage device, and the like.

A secondary battery is classified into a pouch-type secondary battery and a can-type secondary battery, and has a structure in which an electrode assembly and an electrolyte are accommodated inside a case. The electrode assembly has a structure in which electrode plates and separators are alternately stacked. The electrode plate may include a cathode plate and an anode plate. Generally, the electrode plate includes a sheet or film-shaped current collector, and a cathode active material and an anode active material applied to the current collector. For example, the anode plate may be formed by applying the anode active material to a copper sheet, and the cathode plate may be formed by applying a cathode active material to an aluminum sheet. An electrode plate is manufactured through a coating process of coating an active material on the current collector and a drying process of drying the active material. The coating process and the drying process have a significant impact on the quality of secondary batteries.

In the drying process, drying gas such as hot air is injected onto a sheet of the current collector coated with the active material to dry the active material. In the drying process, when a deviation in a flow rate and/or flow velocity of the drying gas varies greatly depending on the position of the electrode plate, there may be a problem in that the quality of the electrode plate may be not uniform because a degree of drying and drying efficiency vary, depending on the position of the electrode plate.

Additionally, when a deviation in the flow rate and/or flow velocity of the drying gas is large, cracks, bending, and the like, may occur in the electrode plate depending on the position of the electrode plate, which may deteriorate the quality of the electrode plate.

### SUMMARY

A distance between side parts of an electrode plate is short, and accordingly, a flow rate and/or flow velocity difference between a central part of the electrode plate and both side parts thereof may not be large. However, when a width of the electrode plate is wide, a large deviation in the flow rate and/or flow velocity may occur between the center portion and both side parts of the electrode plate along (based on) a width direction of the electrode plate. In this case, a drying deviation in the width direction of the electrode plate may increase and the quality of the electrode plate may deteriorate.

According to an aspect of the present disclosure, provided is a gas injection nozzle for drying an electrode plate and a drying apparatus for the electrode plate including the same, which may reduce a deviation in a flow rate and/or flow velocity depending on the position of the electrode plate.

According to an aspect of the present disclosure, provided is a gas injection nozzle for drying an electrode plate and a drying apparatus for the electrode plate including the same, which may reduce a deviation in drying efficiency and drying quality depending on the position of the electrode plate.

According to an aspect of the present disclosure, provided is a gas injection nozzle for drying an electrode plate and a drying apparatus for the electrode plate including the same, which may improve the quality of electrode plate even for a wide electrode plate.

An electrode plate manufactured by a gas injection nozzle for drying an electrode plate and a drying apparatus for the electrode plate including the same, and a battery cell including the same may be widely applied to devices within green technology fields such as an electric vehicle, a battery charging station, and solar and wind power generation using other batteries. Additionally, the electrode plate manufactured according to the present disclosure and the battery cell including the same may be used in an eco-friendly electric vehicle, a hybrid vehicle, and the like, to prevent a climate change by suppressing air pollution and greenhouse gas emissions.

A gas injection nozzle for drying electrode plate according to the present disclosure includes: a nozzle body having a flow space through which drying gas flows, the flow space being formed between a first plate and a second plate spaced apart from the first plate in a first direction; at least one inlet hole formed in the first plate and configured to allow the drying gas to flow into the flow space from the outside of the nozzle body; and a plurality of injection holes formed in the second plate and configured to inject the drying gas from inside of the flow space to the outside, and the at least one inlet hole may have a slit shape crossing the first plate in a second direction, which second direction is a longitudinal direction of the nozzle body.

In one embodiment, the gas injection nozzle for drying an electrode plate may include: a deflector disposed between the first plate and the second plate and configured to change a flow direction of the drying gas introduced through the at least one inlet hole.

In one embodiment, the deflector may have a shape crossing the nozzle body in the second direction and may be disposed in a position facing the at least one inlet hole along (based on) the first direction.

In one embodiment, a first height between the deflector and the first plate may have a value equal to or less than a second height between the deflector and the second plate.

In an embodiment, a first height between the deflector and the first plate may have a value of 1/2 or less of the second height between the deflector and the second plate.

In one embodiment, a width of the deflector may have a value of 10% or more and 90% or less of a width of the first plate.

In one embodiment, the plurality of injection holes may have a circular shape.

A drying apparatus for an electrode plate according to the present disclosure includes: a chamber having a gas supply space through which drying gas for drying the electrode plate flows; and a plurality of gas injection nozzles coupled to the chamber to communicate with the gas supply space of the chamber, wherein the plurality of gas injection nozzles may include: a nozzle body having a flow space through which drying gas flows, between a first plate and a second plate spaced apart from the first plate in a first direction; at least one inlet hole formed in the first plate and configured to allow the drying gas to flow into the flow space from the outside of the nozzle body; and a plurality of injection holes formed in the second plate and configured to inject the drying gas into the flow space to the outside, and the at least one inlet hole may have a slit shape crossing the first plate in a second direction, which second direction is a longitudinal direction of the nozzle body.

In one embodiment, the plurality of gas injection nozzles may further include: a deflector disposed between the first plate and the second plate to change a flow direction of the drying gas introduced through the at least one inlet hole.

In one embodiment, the plurality of gas injection nozzles may have a shape extending in a second direction, which corresponds to a width direction of the electrode plate, and may be spaced apart from each other in a third direction, which is a transport direction of the electrode plate, and the first direction, the second direction and the third direction may be perpendicular to each other.

In one embodiment, the chamber may include an inlet port configured to supply the drying gas to the gas supply space from the outside of the chamber, and a dispersion plate disposed between the inlet port and the first plate, and the dispersion plate may include a plurality of dispersion holes configured to communicate with the drying gas between the inlet port and the inlet hole.

In one embodiment, the inlet port may be configured to supply the drying gas in the second direction, and the plurality of dispersion holes may have a slit shape crossing the dispersion plate in the third direction.

In one embodiment, the inlet port may be configured to supply the drying gas in the second direction, and the plurality of dispersion holes may have a slit shape crossing the dispersion plate in the second direction.

In one embodiment, the chamber may include a first chamber in which drying gas injected onto a first surface of the electrode plate flows, and a second chamber in which drying gas injected onto a second surface of the electrode plate flows, and the plurality of gas injection nozzles may be installed in at least one of the first chamber or the second chamber.

A system for drying an electrode, in particular for drying a cathode and/or an anode of a battery, comprises such an electrode and the gas injection nozzle as defined above, or the drying apparatus as defined above.

A method for preparing a dried electrode plate, in particular for preparing a dried cathode and/or a dried anode of a battery, comprises providing an electrode plate to be dried, and using the gas injection nozzle as defined above, or the drying apparatus as defined above to let drying gas flow for drying the electrode plate.

According to one embodiment of the present disclosure, it may be possible to reduce a deviation in a flow rate and/or flow velocity depending on a position of an electrode plate.

According to one embodiment of the present disclosure, it may be possible to reduce a deviation in drying efficiency and drying quality depending on a position of an electrode plate.

According to one embodiment of the present disclosure, an occurrence of defects such as cracks and bending on both side parts of an electrode plate, even for wide electrode plates, may be reduced, and the quality of the electrode plate may be improved even for wide electrode plates.

### BRIEF DESCRIPTION OF DRAWINGS

Certain aspects, features, and advantages of the present disclosure are illustrated by the following detailed description with reference to the accompanying drawings.
FIG. 1 is a perspective view illustrating a drying apparatus for an electrode plate according to one embodiment.
FIG. 2 is a perspective view illustrating a gas injection nozzle for drying an electrode plate according to one embodiment.
FIG. 3A is a perspective partially cut-away view of a gas injection nozzle for drying an electrode plate according to one embodiment.
FIG. 3B is a cross-sectional view taken along line I-I' of FIG. 1, which illustrates a cross-section of the gas injection nozzle illustrated in FIG. 3A.
FIG. 4A is a perspective partially cut-away view of a gas injection nozzle for drying an electrode plate according to a modified embodiment of FIG. 3A.
FIG. 4B is a cross-sectional view taken along line I-I' of FIG. 1, which illustrates a cross-section of the gas injection nozzle illustrated in FIG. 4A.
FIG. 5A is a perspective view illustrating a drying apparatus for an electrode plate according to another embodiment.
FIG. 5B is a perspective partially cut-away view taken along line II-II' of FIG. 5A, which illustrates cross-sections of a dispersion plate and a gas injection nozzle.
FIG. 5C is a cross-sectional view taken along line II-II' of FIG. 5A, which illustrates a cross-section of the gas injection nozzle illustrated in FIG. 5B.
FIG. 6A is a perspective view illustrating a drying apparatus for an electrode plate according to another embodiment.
FIG. 6B is a perspective partially cut-away view taken along line III-III' of FIG. 6A, which illustrates cross-sections of a dispersion plate and a gas injection nozzle.
FIG. 6C is a cross-sectional view taken along line III-III' of FIG. 6A, which illustrates a cross-section of the gas injection nozzle illustrated in FIG. 6B.
FIG. 7A is a perspective partially cut-away view of a gas injection nozzle for drying an electrode plate according to a modified embodiment of FIG. 5B.
FIG. 7B is a cross-sectional view taken along line II-II' of FIG. 5A, which illustrates a cross-section of the gas injection nozzle illustrated in FIG. 7A.
FIG. 8A is a perspective view illustrating a drying apparatus for an electrode plate according to a first comparative example.
FIG. 8B is a cross-sectional view taken along line IV-IV' of FIG. 8A, which illustrates a state in which the gas injection nozzle is disposed in the drying apparatus for an electrode plate according to the first comparative example.
FIG. 8C is a perspective partially cut-away view of the gas injection nozzle illustrated in FIG. 8B.
FIG. 9 is a cross-sectional view taken along line IV-IV' of FIG. 8A, which illustrates a state in which the gas injection nozzle is disposed in the drying apparatus for an electrode plate according to a second comparative example.
FIG. 10A is a view illustrating a simulation result of the flow of drying gas with respect to the gas injection nozzle of a first inventive example illustrated in FIGS. 1 to 3B.
FIG. 10B is a view illustrating a simulation result of the flow of drying gas with respect to the gas injection nozzle of a second inventive example illustrated in FIGS. 5A to 5C.
FIG. 10C is a view illustrating a simulation result of the flow of drying gas with respect to the gas injection nozzle of a third inventive example illustrated in FIGS. 6A to 6C.
FIG. 11A is a view illustrating a simulation result of the flow of drying gas with respect to the gas injection nozzle of the first comparative example illustrated in FIGS. 8A to 8C.
FIG. 11B is a view illustrating a simulation result of the flow of drying gas with respect to the gas injection nozzle of the second comparative example illustrated in FIG. 9.
FIG. 12A is a view illustrating a simulation result of the flow of drying gas with respect to the gas injection nozzle illustrated in FIGS. 3A and 3B.
FIG. 12B is a view illustrating a simulation result of the flow of drying gas with respect to the gas injection nozzle illustrated in FIGS. 4A and 4B.
FIG. 13A is a view illustrating a result of simulating the flow of drying gas with respect to the gas injection nozzle illustrated in FIGS. 3A and 3B in another direction.
FIG. 13B is a view illustrating a result of simulating the flow of drying gas with respect to the gas injection nozzle illustrated in FIGS. 4A and 4B in another direction.

### DETAILED DESCRIPTION

The same reference numeral or symbol written in each accompanying drawing of the specification refers to parts or components that perform substantially the same function. The present inventive concept is described using the same reference numeral or symbol even in different exemplary embodiments for easy description and appreciation. In this aspect, although all components having the same reference numeral are illustrated in a plurality of drawings, the plurality of drawings do not necessarily refer to a single exemplary embodiment.

Hereinafter, the singular also includes the plural unless specifically stated otherwise in the phrase. It will be further understood that the terms "comprises," "comprising," "includes" and/or "including", when used herein, specify the presence of stated features, integers, steps, operations, elements, components and/or combinations thereof, but do not preclude the presence or addition of one or more other features, integers, steps, operations, elements, components, and/or groups thereof.

In addition, it should be noted in advance that the expressions such as "above," "upper," "below", "beneath," "lower," "side," "front," and "rear" are based on the direction illustrated in the drawings, and may be expressed differently if the direction of the object is changed.

In addition, in the present specification and claims, terms including ordinal numbers such as "first" and "second" may be used to distinguish between components. These ordinal numbers are used to distinguish the same or similar components from each other, and the meaning of the terms should not be construed as limited by the use of these ordinal numbers. For example, the components combined with these ordinal numbers should not be construed as limiting the order of use or arrangement of the components. If necessary, the ordinal numbers may be used interchangeably.

Hereinafter, the present disclosure will be described in detail with reference to the attached drawings. However, this is merely illustrative and the present disclosure is not limited to the specific embodiments described by way of example.

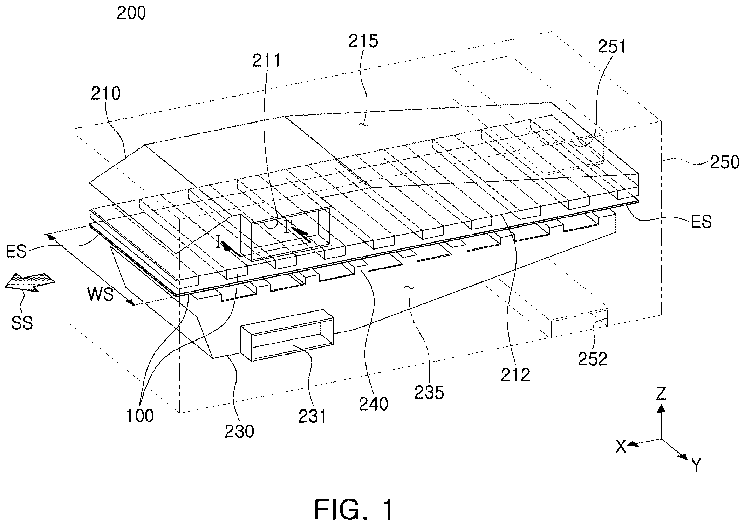

FIG. 1 is a perspective view illustrating a drying apparatus 200 for an electrode plate according to one embodiment.

Referring to FIG. 1, the drying apparatus 200 for an electrode plate according to one embodiment of the present disclosure may include a chamber through which drying gas flows, and a plurality of gas injection nozzles coupled to the chamber. The chamber may include a first chamber 210 and a second chamber 230, and the gas injection nozzle may include a first injection nozzle 100 and a second injection nozzle 240.

An electrode plate ES may include a cathode plate and an anode plate. The electrode plate ES may include a current collector in the form of a sheet or a film, and a cathode active material or an anode active material applied to the current collector. For example, the anode plate may be formed by applying the anode active material to a copper sheet, and the cathode plate may be formed by applying the cathode active material to an aluminum sheet. The electrode plate ES may be manufactured through a coating process of coating the active material and a drying process of drying the active material. The drying apparatus 200 for an electrode plate according to one embodiment of the present disclosure may be applied to the drying process of the electrode plate ES. The drying apparatus 200 for an electrode plate according to one embodiment may be applied to the drying process of the anode plate, but may be also applicable to the drying process of the cathode plate.

A gas supply space in which drying gas for drying the electrode plate ES flows may be formed in the chamber. The gas supply space may include a first gas supply space 215 formed in the first chamber 210 and a second gas supply space 235 formed in the second chamber 230.

The drying gas may include hot air having a predetermined temperature, but the temperature, composition, and physical properties of the drying gas may be variously changed. The first chamber 210 and the second chamber 230 may be disposed on the two opposite surfaces of the electrode plate ES to be dried, respectively. For example, the first chamber 210 may be configured to allow drying gas injected onto a first surface of the electrode plate ES to flow, and the second chamber 230 may be configured to allow drying gas injected onto a second surface of the electrode plate ES to flow. The first surface and the second surface of the electrode plate ES may correspond to an upper (e.g., top) surface and a lower (e.g., bottom) surface of the electrode plate ES, respectively. The first chamber 210 and the second chamber 230 may be spaced apart from each other by a predetermined interval, and the electrode plate ES may be disposed and/or move between the first chamber 210 and the second chamber 230 in a transport direction SS. The transport direction SS of the electrode plate ES may correspond to a third direction (X-direction).

Each of the first chamber 210 and the second chamber 230 may include an inlet port for supplying the drying gas to the gas supply space from the outside of the chamber. For example, the first chamber 210 may include a first inlet port 211 configured to supply the drying gas to the first gas supply space 215 from the outside of the first chamber 210, and the second chamber 230 may include a second inlet port 231 configured to supply the drying gas to the second gas supply space 235 from the outside of the second chamber 230. Each of the first inlet port 211 and the second inlet port 231 may be disposed on one side of the first chamber 210 and one side of the second chamber 230, respectively, and may be configured to supply the drying gas in a longitudinal direction (or second direction) (Y-direction) of the gas injection nozzle. A supply direction of the drying gas may correspond to a direction, perpendicular to the transport direction SS of the electrode plate ES, that is, a width direction of the electrode plate ES.

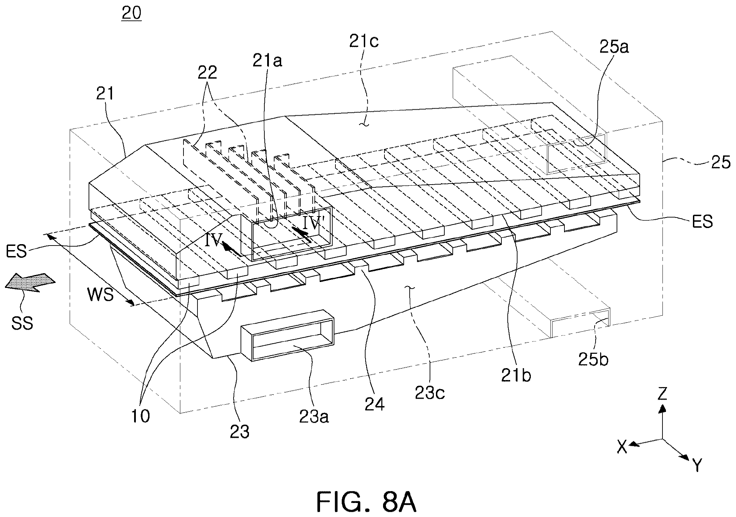

The first chamber 210 and the second chamber 230 may be disposed in a main chamber 250. The main chamber 250 may include an exhaust port for discharging the drying gas injected onto the electrode plate ES through the gas injection nozzle 100 to the outside of the main chamber 250. The exhaust port may include a first exhaust port 251 disposed at the first chamber 210 and a second exhaust port 252 disposed at the second chamber 230. Guide vanes may be disposed in the first exhaust port 251 and the second exhaust port 252 to guide and stabilize a gas flow. For example, the guide vanes installed in the first exhaust port 251 and the second exhaust port 252 may include a shape divided into a plurality of zones, like a guide vane 22 illustrated in FIG. 8A.

The plurality of gas injection nozzles may be coupled to the first chamber 210 and/or the second chamber 230 so as to communicate with the first gas supply space 215 of the first chamber 210 and/or the second gas supply space 235 of the second chamber 230. The gas injection nozzle may include a plurality of first injection nozzles 100 disposed in the first chamber 210 and a plurality of second injection nozzles 240 disposed in the second chamber 230. The first injection nozzle 100 and the second injection nozzle 240 may be disposed in positions corresponding to each other to inject the drying gas from an upper side and a lower side of the electrode plate ES, and may have the same number. However, the arrangement position and the number of the first injection nozzle 100 and the second injection nozzle 240 are not limited thereto.

The first injection nozzle 100 may be installed on a base plate 212 of the first chamber 210. The base plate 212 may be configured as a surface of the first chamber 210 opposing the electrode plate ES. The second injection nozzle 240 may also be installed on a surface of the second chamber 230 opposing the electrode plate ES.

The first injection nozzle 100 and the second injection nozzle 240 may have a shape extending in a width direction (Y-direction) of the electrode plate ES, a direction perpendicular to the transport direction SS (i.e., the third direction) of the electrode plate ES. That is, a longitudinal direction (Y-direction) of the first injection nozzle 100 and the second injection nozzle 240 may correspond to the width direction of the electrode plate ES. The plurality of first injection nozzles 100 may be spaced apart from each other in the third direction (X-direction), the transport direction SS of the electrode plate ES. The plurality of second injection nozzles 240 may be spaced apart from each other in the third direction (X-direction), the transport direction SS of the electrode plate ES.

When a width of the electrode plate ES is large, i.e., when the electrode plate is wide, a length of each of the first injection nozzle 100 and a length of the second injection nozzle 240 also become longer. When the length of the first injection nozzle 100 and the length of the second injection nozzle 240 increase, in the longitudinal direction (second direction) (Y-direction) of the injection nozzle, a deviation in a flow rate and/or flow velocity between a central portion and both side parts, or a deviation in a flow rate and/or flow velocity between both side parts may increase. In this case, a drying deviation may increase depending on a width directional (Y-direction) position of the electrode plate ES, and the quality of the electrode plate ES may deteriorate. The drying apparatus 200 for an electrode plate of the present disclosure may reduce the deviation in the flow rate and/or flow velocity by improving the gas injection nozzle 100, thereby improving the quality of the electrode plate ES not only when a width WS of the electrode plate ES is narrow, but also when the width WS of the electrode plate ES is wide. The drying apparatus 200 for an electrode plate of the present disclosure may be applied to an electrode plate ES having a wide width, such as an electrode plate ES having the width WS of 700 mm or more, 1000 mm or more, 1200 mm or more, or 1500 mm or more. However, the width WS of the electrode plate ES applied to the drying apparatus 200 for an electrode plate of the present disclosure may have a value of 700 mm or less.

Meanwhile, the first inlet port 211 and the second inlet port 231 may be configured to supply the drying gas in the second direction (Y-direction), the longitudinal direction of the gas injection nozzle. After the drying gas flows into the first chamber 210 and the second chamber 230 in the second direction (Y-direction) and then flows and disperses in the first gas supply space 215 and the second gas supply space 235, the drying gas may flow into the gas injection nozzle and may be injected in a first direction (Z-direction). That is, the first direction (Z-direction), an injection direction of the drying gas injected through the gas injection nozzle 100, may be different from the second direction (Y-direction) in which the drying gas flows into the first chamber 210 and the second chamber 230. Accordingly, according to one embodiment of the present disclosure, it may be possible to reduce the influence of the pressure and/or flow velocity of gas flowing into the first chamber 210 and the second chamber 230 on the flow rate and/or flow velocity of gas injected through the gas injection nozzle 100. That is, since the drying gas is injected through the gas injection nozzle 100 after changing a direction thereof, it may be possible to reduce the deviation in the flow rate and/or flow velocity depending on the width directional (Y-direction) position of the electrode plate ES.

The first injection nozzle 100 and the second injection nozzle 240 may have different configurations. The first injection nozzle 100 and the second injection nozzle 240 may have the same configuration. For example, the first injection nozzle 100 may have a shape including a circular perforated hole (corresponding to an injection hole 125 described below), and the second injection nozzle 240 may have a shape including a Coanda nozzle i.e., a nozzle having a shape that takes advantage of the Coanda effect. Alternatively, both the first injection nozzle 100 and the second injection nozzle 240 may have a shape including a circular perforated hole.

A plurality of gas injection nozzles of the present disclosure may be installed in at least one of the first chamber 210 and/or the second chamber 230. However, for convenience of explanation in the present disclosure below, a case in which a gas injection nozzle is the first injection nozzle 100 installed in the first chamber 210 will be described, but the gas injection nozzle of the present disclosure may also be applied to the second injection nozzle 240 installed in the second chamber 230. Hereinafter, reference numeral '100' of the first injection nozzle 100 will be used for the gas injection nozzle.

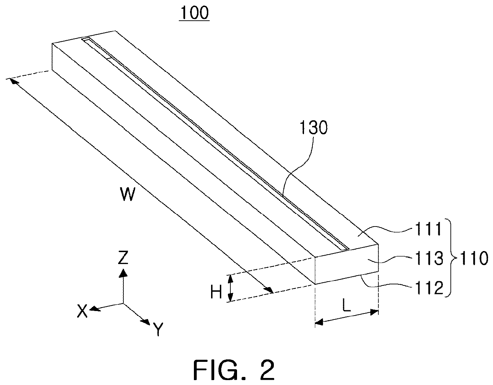

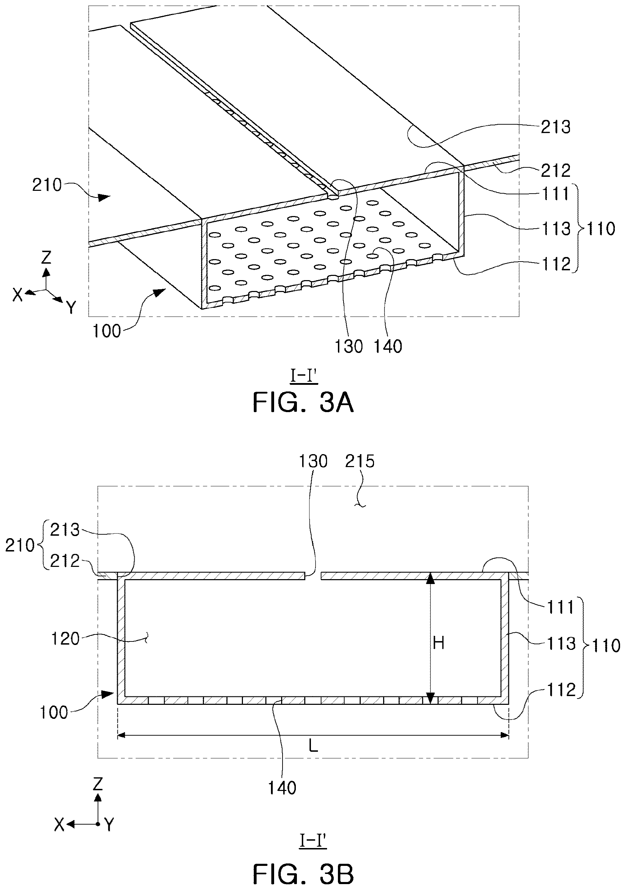

FIG. 2 is a perspective view illustrating a gas injection nozzle 100 for drying an electrode plate according to one embodiment, FIG. 3A is a perspective partially cut-away view of a gas injection nozzle 100 for drying an electrode plate according to one embodiment, and FIG. 3B is a cross-sectional view taken along line I-I' of FIG. 1, which illustrates a cross-section of the gas injection nozzle 100 illustrated in FIG. 3A.

Referring to FIGS. 2, 3A and 3B together with FIG. 1, a gas injection nozzle 100 according to one embodiment may be coupled to a chamber (e.g., the first chamber 210) configured to supply drying gas for drying the electrode plate ES. In the following description, the chamber will be described using the first chamber 210 as an example. However, when the gas injection nozzle 100 according to one embodiment is applied to a second injection nozzle, 'chamber' may refer to the second chamber 230.

The gas injection nozzle 100 according to one embodiment may include a nozzle body 110. The nozzle body 110 may form a flow space 120 in which drying gas introduced from the outside of the nozzle body 110 flows.

The nozzle body 110 may include a first plate 111 and a second plate 112. The nozzle body 110 may include a plurality of side plates 113 connecting edges of the first plate 111 and edges of the second plate 112. The nozzle body 110 may have a shape formed by the first plate 111, the second plate 112, and the plurality of side plates 113.

As an example, the nozzle body 110 has a rectangular parallelepiped shape having a height "H" in the first direction (Z-direction), a length "W" in the second direction (Y-direction), and a width "L" in a third direction (X-direction). When the nozzle body 110 has a rectangular parallelepiped shape, the first plate 111 and the second plate 112 may be disposed on an upper (or top) surface and a lower (or bottom) surface of the nozzle body 110, and four side plates 113 may be disposed on a side surface of the nozzle body 110. The width L of the nozzle body 110 may correspond to the transport direction SS of the electrode plate ES, and the length W of the nozzle body 110 may correspond to a width direction (Y-direction) of the electrode plate ES.

The first plate 111 may have a flat plate shape, and as an example, may have a square plate shape. The second plate 112 may be spaced apart from the first plate 111 in the first direction (Z-direction). The second plate 112 may have a flat plate shape, and as an example, may have a square plate shape.

The side plate 113 may connect the edge of the first plate 111 and the edge of the second plate 112. The side plate 113 may extend from the edge of the first plate 111 in the first direction (Z-direction). An end of the first plate 111 and an end of the second plate 112 may be connected by the plurality of side plates 113. When the first plate 111 and the second plate 112 have a square plate shape, the first plate 111 and the second plate 112 may be connected by four side plates 113.

A flow space 120 in which the drying gas introduced from the first chamber 210 flows may be formed between the first plate 111 and the second plate 112. The flow space 120 may be surrounded by the first plate 111, the second plate 112, and the plurality of side plates 113.

The nozzle body 110 may be coupled to a chamber (e.g., the first chamber 210). The nozzle body 110 may be coupled to an opening 213 formed in the base plate 212 in the outside of the chamber. The first plate 111 may form the same plane as that of the base plate 212. That is, the first plate 111 and the base plate 212 may be disposed at the same height. However, the arrangement position of the first plate 111 is not limited thereto, and the first plate 111 may be disposed to protrude into the first gas supply space 215 of the first chamber 210.

The nozzle body 110 may include at least one inlet hole 130 formed in the first plate 111 and a plurality of injection holes 140 formed in the second plate 112.

At least one inlet hole 130 formed in the first plate 111 may be configured to allow the drying gas to flow into the flow space 120 from the outside of the nozzle body 110. At least one inlet hole 130 may have a slit shape crossing the first plate 111 in the second direction (Y-direction), a longitudinal direction of the nozzle body 110. FIGS. 2, 3A and 3B illustrate a configuration in which one inlet hole 130 is installed in the first plate 111, but the number of inlet holes 130 installed in the first plate 111 is not limited thereto. For example, two or more inlet holes 130 may be disposed in the first plate 111.

The plurality of injection holes 140 formed in the second plate 112 may be configured to inject the drying gas in the flow space 120 to the outside. The plurality of injection holes 140 may be formed of a plurality of perforated holes perforated in the second plate 112. The plurality of injection holes 140 may have a circular shape, but the present disclosure is not limited thereto. For example, the shape of the plurality of injection holes 140 may be changed in various manners, such as oval or square. The number and arrangement of the plurality of injection holes 140 are not limited to those illustrated in FIG. 3A, and various changes thereof may be possible.

A total cross-sectional area of the plurality of injection holes 140 may have a value larger than a value of a total cross-sectional area of at least one inlet hole 130. Accordingly, the drying gas may pass through the injection hole 140 and may be simultaneously injected onto the electrode plate ES at reduced flow rate, thereby drying the electrode plate ES.

As described above, according to one embodiment of the present disclosure, the drying gas may pass through at least one inlet hole 130 including a slit-shaped hole, and the drying gas introduced into the flow space 120 through the slit-shaped inlet hole 130 may be dispersed and uniformized (become more uniform or uniform) in the flow space 120 and may then be injected through the injection hole 140. Accordingly, the drying gas may be injected onto the electrode plate ES with little deviation in the flow rate and/or flow velocity in the longitudinal direction (Y-direction) of the gas injection nozzle 100, that is, the width direction of the electrode plate ES. Accordingly, according to one embodiment, even for wide electrode plates ES, the occurrence of defects such as cracks and bending on both side parts of the electrode plate ES may be reduced, and even for wide electrode plates ES, the quality of the electrode plate ES may be improved.

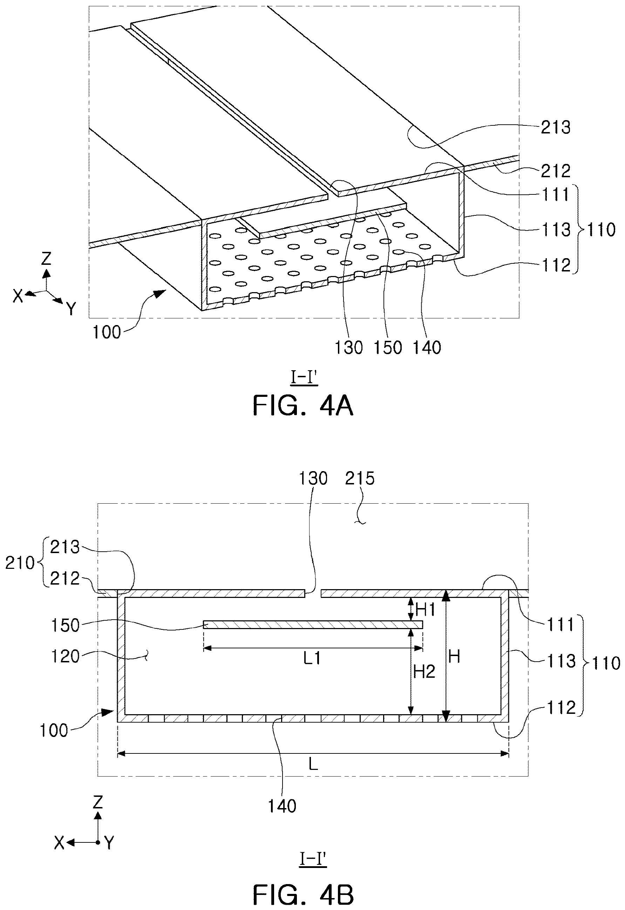

FIG. 4A is a perspective partially cut-away view of a gas injection nozzle 100 for drying an electrode plate according to a modified embodiment of FIG. 3A, and FIG. 4B is a cross-sectional view taken along line I-I' of FIG. 1, which illustrates a cross-section of the gas injection nozzle 100 illustrated in FIG. 4A.

Similarly to the gas injection nozzle 100 illustrated in FIGS. 3A and 3B, a gas injection nozzle 100 illustrated in FIGS. 4A and 4B may include a nozzle body 110 including a first plate 111 and a second plate 112, and may include at least one slit-shaped inlet hole 130 formed in the first plate 111 and a plurality of injection holes 140 formed in the second plate 112. As compared to the gas injection nozzle 100 illustrated in FIGS. 3A and 3B, the gas injection nozzle 100 illustrated in FIGS. 4A and 4B has a difference therefrom in that the gas injection nozzle 100 further includes a deflector 150. Accordingly, a configuration different from the gas injection nozzle 100 illustrated in FIGS. 3A and 3B will be mainly described.

The deflector 150 may be disposed between the first plate 111 and the second plate 112 so that a flow direction of the drying gas illustrated through at least one inlet hole 130 may be changed. That is, the deflector 150 may prevent the drying gas passing through the inlet hole 130 from flowing in the first direction (Z-direction), and thus, a phenomenon in which the drying gas passing through the inlet hole 130 is directly injected through the injection hole 140 may be limited.

The deflector 150 may have a shape crossing between the first plate 111 and the second plate 112 in the second direction (Y-direction), the width direction of the electrode plate. The first plate 111 and the deflector 150 may be spaced apart from each other in the first direction (Z-direction). The deflector 150 and the second plate 112 may also be spaced apart from each other in the first direction (Z-direction). The first plate 111 and the deflector 150 may be spaced apart from each other by a first height H1, and the deflector 150 and the second plate 112 may be spaced apart from each other by a second height H2.

The deflector 150 may be disposed in a position facing at least one inlet hole 130 along (based on) the first direction (Z-direction). That is, at least the inlet hole 130 and the deflector 150 may be disposed in positions corresponding to each other in the third direction (X-direction). Accordingly, the drying gas passing through the inlet hole 130 may hit the deflector 150 to change a direction thereof, so that the drying gas may flow to both sides of the deflector 150. After the flow of the drying gas may be dispersed to both sides of the deflector 150, the drying gas may move to a lower side of the deflector 150 and then pass through the injection hole 140.

The deflector 150 may be positioned closer to the upper plate 111 as illustrated in FIG. 4B. That is, the first height H1 between the deflector 150 and the first plate 111 may have a value equal to or less than the second height H2 between the deflector 150 and the second plate 112. When the first height H1 is larger than the second height H2, since the distance between the at least one inlet hole 130 and the deflector 150 increases, the effect of dispersing the drying gas may be reduced due to the drying gas hitting the deflector 150 to change the direction thereof. However, the embodiment of the present disclosure does not exclude a case in which the first height H1 is equal to the second height H2 or a case in which the first height H1 is larger than the second height H2, however, in those cases the improvement in terms of making the flow rate and velocity of the drying gas more uniform may be reduced as compared to the case illustrated in FIG. 4A wherein the first H1 is less than the second height H2. In some embodiments, the first height may be 1/2 or less of the second height.

Meanwhile, a width L1 of the deflector 150 may have a value of 10% or more and 90% or less of a width L of the first plate 111. For example, the width L1 of the deflector 150 may have a value of 10% or more, 20% or more, 30% or more, 40% or more, or 50% or more of the width L of the first plate 111. Additionally, the width L1 of the deflector 150 may have a value of 90% or less, 80% or less, 70% or less, 60% or less, and 50% or less of the width L of the first plate 111. When the width L1 of the deflector 150 is less than 10% of the width L of the first plate 111, the effect of changing a flow direction of the drying gas through the deflector 150 may be reduced. Conversely, when the width L1 of the deflector 150 is more than 90% of the width L of the first plate 111, after the drying gas hits the deflector 150, the drying gas flows over a long distance in the space between the deflector 150 and the first plate 111. Therefore, flow resistance may be increased to reduce the effect of changing the flow direction thereof.

As described above, according to one embodiment of the present disclosure, after the drying gas hits the deflector 150 to change the direction thereof, the drying gas may move to the lower side of the deflector 150, so that the flow or flow velocity of the drying gas is sufficiently dispersed and/or uniformized in the flow space 120, and the drying gas may then be injected through the injection hole 140.

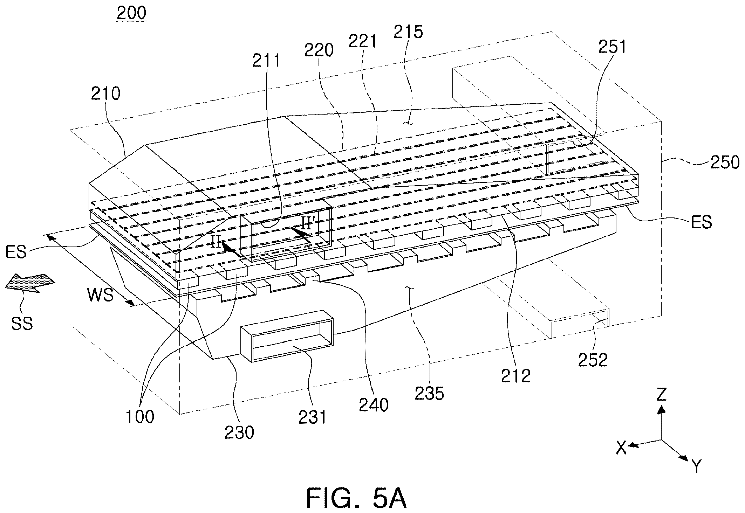

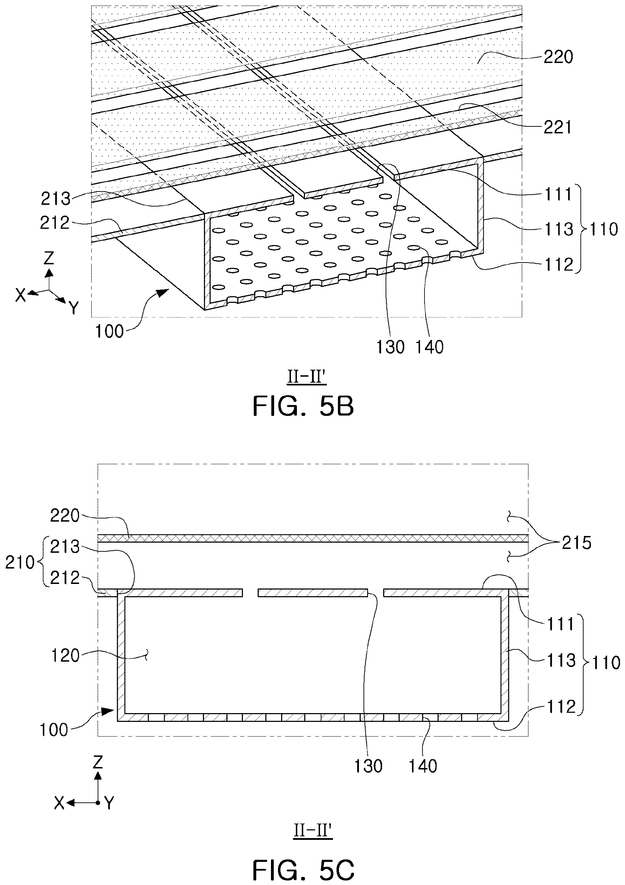

FIG. 5A is a perspective view illustrating a drying apparatus 200 for an electrode plate according to another embodiment, FIG. 5B is a perspective partially cut-away view taken along line II-II' of FIG. 5A, which illustrates cross-sections of a dispersion plate 220 and a gas injection nozzle 100, and FIG. 5C is a cross-sectional view taken along line II-II' of FIG. 5A, which illustrates a cross-section of the gas injection nozzle 100 illustrated in FIG. 5B.

As compared to the drying apparatus 200 for an electrode plate illustrated in FIG. 1, the drying apparatus 200 for an electrode plate illustrated in FIG. 5A has a difference therefrom only in that the dispersion plate 220 is disposed in the chamber 210 and in the number of at least one inlet hole 130. Accordingly, descriptions of identical or similar components will be omitted and only different components will be described.

Referring to FIGS. 5A to 5C, the dispersion plate 220 may be disposed in a gas supply space 215 formed in a chamber (e.g., the first chamber 210). The dispersion plate 220 may be disposed in a position spaced apart from the first plate 111 in the first direction (Z-direction), between the inlet port 211 and the first plate 111. The dispersion plate 220 may be disposed in parallel with the first plate 111.

The dispersion plate 220 may include a plurality of dispersion holes 221 configured to communicate with the drying gas between the inlet port 211 of the chamber 210 and the inlet hole 130 formed in the first plate 111. Accordingly, the drying gas introduced into the gas supply space 215 through the inlet port 211 may be dispersed through the plurality of dispersion holes 221 and may then flow toward the inlet hole 130.

The inlet port 211 may be configured to supply the drying gas in the second direction (Y-direction), the width direction of the electrode plate ES, and the plurality of dispersion holes 221 may have a slit shape crossing the dispersion plate 220 in the third direction (X-direction), the transport direction SS of the electrode plate ES. That is, a direction in which the drying gas flows through the inlet port 211 and a direction in which the dispersion hole 221 extends may intersect each other.

Meanwhile, as illustrated in FIGS. 5B and 5C, the first plate 111 may have a plurality of inlet holes 130 formed therein. The inlet hole 130 may have a slit shape crossing the first plate 111 in the second direction.

The plurality of injection holes 140 formed in the second plate 112 may be formed of circular perforated holes. Since the configuration of the plurality of injection holes 140 is the same as the configuration of the injection hole 140 illustrated in FIGS. 3A and 3B, detailed description thereof will be omitted.

As described above, according to one embodiment of the present disclosure, the drying gas introduced into the gas supply space 215 through the inlet port 211 may be dispersed and uniformized while passing through the dispersion hole 221 of the dispersion plate 220, and then the drying gas may be introduced into the gas injection nozzle 100. Additionally, the drying gas introduced into the flow space 120 through the slit-shaped inlet hole 130 may be dispersed and uniformized in the flow space 120 and may then be injected through the injection hole 140.

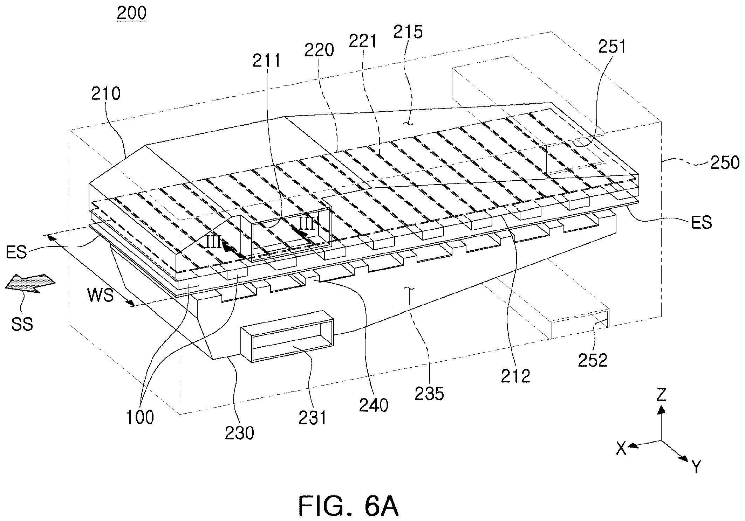

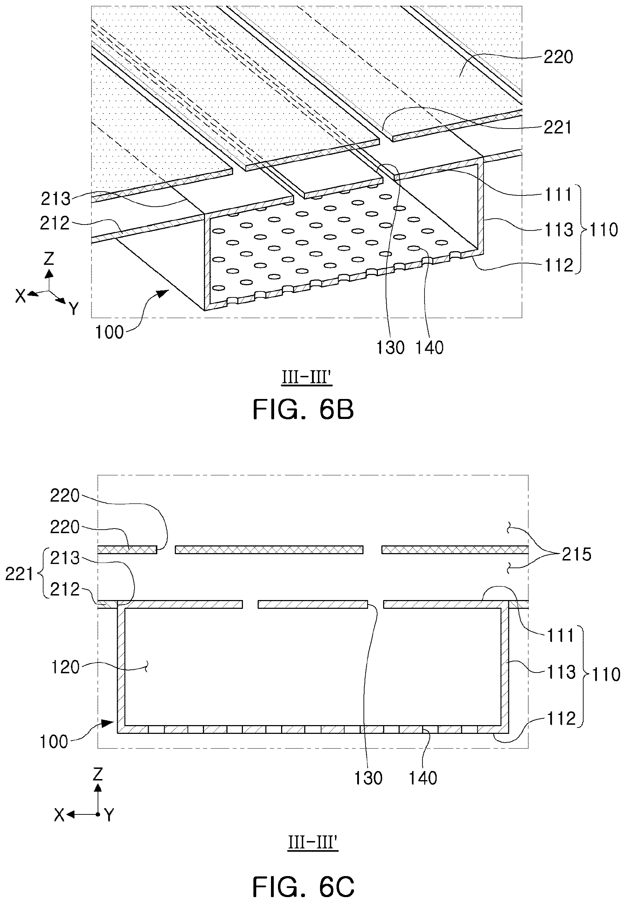

FIG. 6A is a perspective view illustrating a drying apparatus 200 for an electrode plate according to another embodiment, FIG. 6B is a perspective partially cut-away view taken along line III-III' of FIG. 6A, which illustrates cross-sections of a dispersion plate 220 and a gas injection nozzle 100, and FIG. 6C is a cross-sectional view taken along line III-III' of FIG. 6A, which illustrates a cross-section of the gas injection nozzle 100 illustrated in FIG. 6B.

As compared to the drying apparatus 200 for an electrode plate illustrated in FIGS. 5A to 5C, the drying apparatus 200 for an electrode plate illustrated in FIGS. 6A to 6C has a difference therefrom only in direction in which a plurality of dispersion holes 221 formed in the dispersion plate 220 extends.

As illustrated in FIGS. 6A to 6C, a plurality of dispersion holes 221 may have a slit shape crossing the dispersion plate 220 in the second direction (Y-direction), the width direction of the electrode plate ES. In this manner, a direction in which the dispersion hole 221 extends may be configured in the same direction as a flow direction of the drying gas through an inlet port 211.

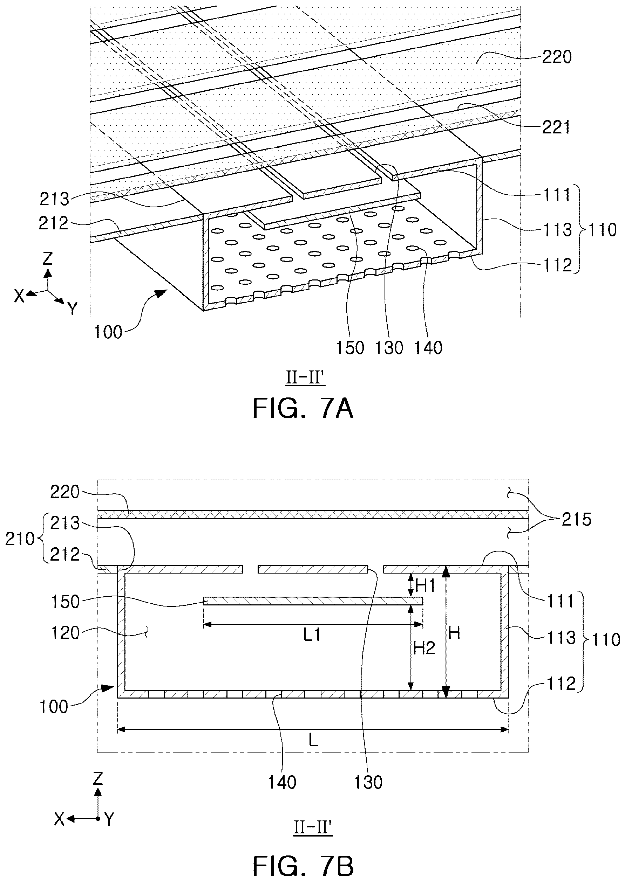

FIG. 7A is a perspective partially cut-away view of a gas injection nozzle 100 for drying an electrode plate according to a modified embodiment of FIG. 5B, and FIG. 7B is a cross-sectional view taken along line II-II' of FIG. 5A, which illustrates a cross-section of the gas injection nozzle 100 illustrated in FIG. 7A.

As compared to the gas injection nozzle 100 illustrated in FIGS. 5B and 5C, the gas injection nozzle 100 illustrated in FIGS. 7A and 7B has a difference therefrom in that the gas injection nozzle 100 further includes a deflector 150. That is, the deflector 150 may also be applied to one embodiment including a dispersion plate 220.

The deflector 150 may be disposed between the first plate 111 and the second plate 112 and may change the flow direction of the drying gas introduced through at least one inlet hole 130. Accordingly, after the drying gas passing through the inlet hole 130 hits the deflector 150 to change the direction thereof, the drying gas may flow to both sides of the deflector 150. The flow of the drying gas may be dispersed to both sides of the deflector 150 and may then move to a lower side of the deflector 150 and pass through the injection hole 140.

The deflector 150 may also be applied to the gas injection nozzle 100 illustrated in FIGS. 6B and 6C.

In this manner, according to one embodiment of the present disclosure, the drying gas introduced into the gas supply space 215 through the inlet port 211 may be dispersed and uniformized while passing through the dispersion hole 221 of the dispersion plate 220, and then the drying gas may be introduced into the gas injection nozzle 100. Additionally, after the drying gas introduced into the flow space 120 through the slit-shaped inlet hole 130 hits the deflector 150 to change the direction thereof, the drying gas may move to a lower side of the deflector 150. Accordingly, the drying gas may be injected through the injection hole 140 after the flow or flow velocity of the drying gas is sufficiently dispersed and/or uniformized in the flow space 120.

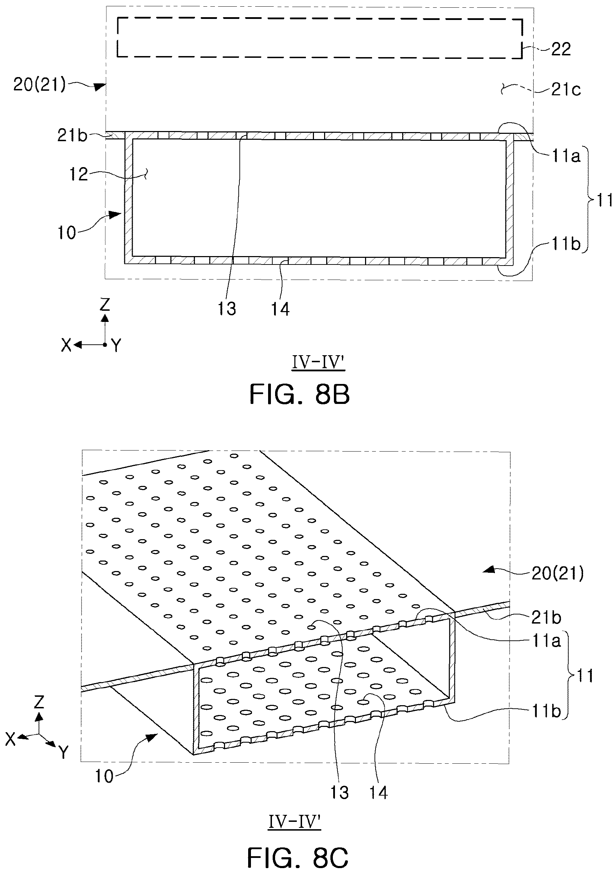

FIG. 8A is a perspective view illustrating a drying apparatus 20 for an electrode plate according to a first comparative example, FIG. 8B is a cross-sectional view taken along line IV-IV' of FIG. 8A, which illustrates a state in which the gas injection nozzle is disposed in the drying apparatus 20 for an electrode plate according to the first comparative example, and FIG. 8C is a perspective partially cut-away view of the gas injection nozzle illustrated in FIG. 8B.

Referring to FIG. 8A, as compared to the drying apparatus 200 for an electrode plate according to one embodiment illustrated in FIG. 1, the drying apparatus 20 for an electrode plate according to the first comparative example has a difference therefrom in that it includes a guide vane 22 and, also, a difference in the configuration of the gas injection nozzle (or the first injection nozzle 10). Detailed descriptions of identical or similar configurations in both drying apparatuses will be omitted.

The drying apparatus 20 for an electrode plate according to the first comparative example accommodates a first chamber 21 and a second chamber 23 in a main chamber 25. An electrode plate ES to be dried may be disposed between the first chamber 21 and the second chamber 23.

The first chamber 21 has a first inlet port 21a through which drying gas flows, and the drying gas introduced through the first inlet port 21a may be accommodated in a first gas supply space 21c. The first chamber 21 may have the guide vane 22 installed in a portion of the first gas supply space 21c adjacent to the first inlet port 21a. The guide vane 22 may have a shape divided into a plurality of zones in order to disperse the gas introduced into the first inlet port 21a.

The second chamber 23 may have a second inlet port 23a through which the drying gas flows, and the drying gas introduced through the second inlet port 23a may be accommodated in a second gas supply space 23c. A guide vane may also be installed in the second chamber 23 in a portion of the second gas supply space 23c adjacent to the second inlet port 23a.

The gas injection nozzle may include a first injection nozzle 10 installed in the first chamber 21 and a second injection nozzle 24 installed in the second chamber 23. The first injection nozzle 10 may be coupled to a base plate 21b of the first chamber 21. The drying gas injected from the gas injection nozzle may dry the electrode plate ES and may then be discharged to the outside of the main chamber 25 through a first exhaust port 25a and a second exhaust port 25b. In the comparative example, reference numeral `10' of the first injection nozzle 10 will be used for the gas injection nozzle.

Referring to FIGS. 8B and 8C, the gas injection nozzle 10 for drying the electrode plate according to the first comparative example may include a nozzle body 11 coupled to the base plate 21b of the first chamber 21. A guide vane 22 may be installed in the first gas supply space 21c of the first chamber 21.

The nozzle body 11 may include a first plate 11a on which an inlet hole 13 is formed and a second plate 11b on which an injection hole 14 is formed. The inlet hole 13 may include a plurality of perforated holes perforated in the first plate 11a. The injection hole 14 may include a plurality of perforated holes perforated in the second plate 11b. The inlet hole 13 and the injection hole 14 may each be formed as circular holes.

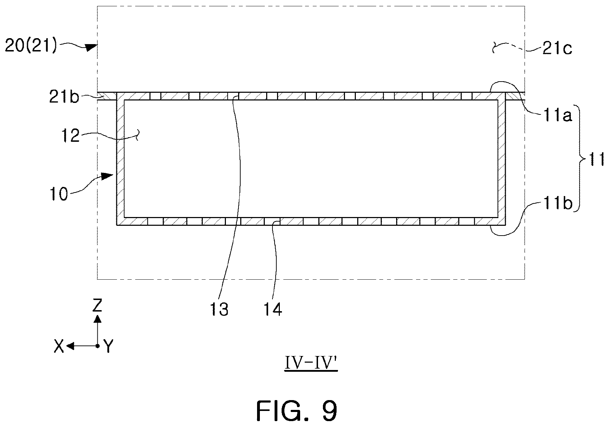

FIG. 9 is a cross-sectional view taken along line IV-IV' of FIG. 8A, which illustrates a state in which the gas injection nozzle 10 is disposed in the drying apparatus 20 for an electrode plate according to a second comparative example.

As compared to the first comparative example illustrated in FIGS. 8A to 8C, in the drying apparatus 20 for an electrode plate according to the second comparative example illustrated in FIG. 9, a state in which the guide vane 22 is not disposed in the first gas supply space 21c of the first chamber 21 is illustrated.

In the drying apparatus 20 for an electrode plate according to the second comparative example illustrated in FIG. 9, since the gas injection nozzle 10 has the same configuration as the first comparative example illustrated in FIGS. 8A to 8C, detailed descriptions thereof is omitted.

Hereinafter, embodiments of the present disclosure will be further described with reference to specific experimental examples. Inventive examples and comparative examples included in the experimental examples are merely illustrative of the present disclosure.

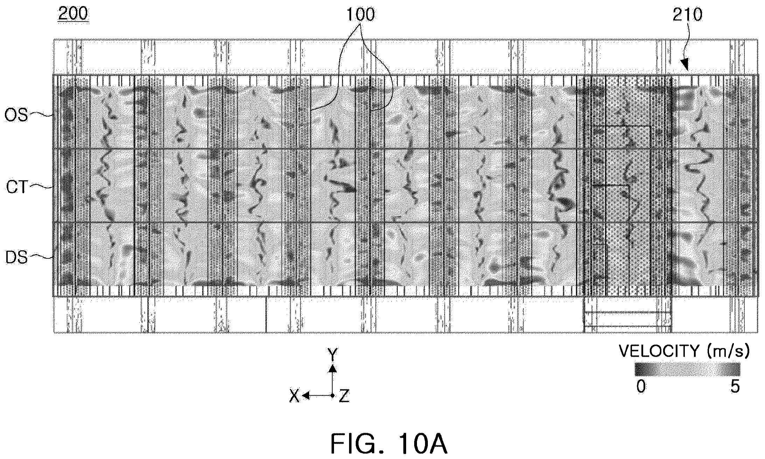

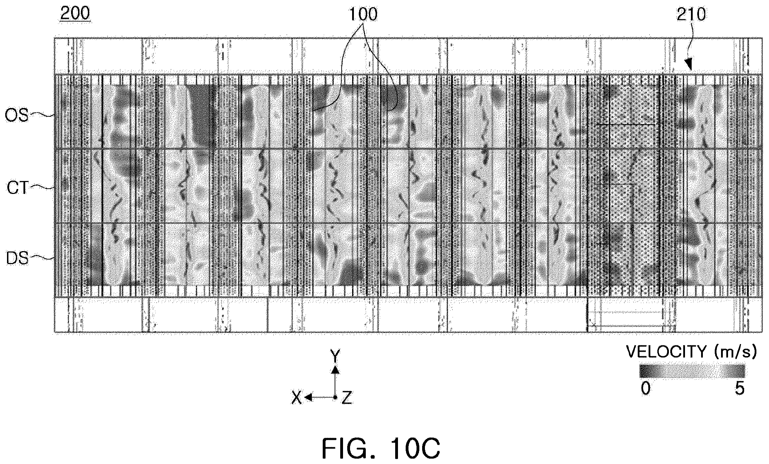

FIG. 10A is a view illustrating a simulation result of the flow of drying gas with respect to the gas injection nozzle 100 of a first inventive example illustrated in FIGS. 1 to 3B, FIG. 10B is a view illustrating a simulation result of the flow of drying gas with respect to the gas injection nozzle 100 of a second inventive example illustrated in FIGS. 5A to 5C, and FIG. 10C is a view illustrating a simulation result of the flow of drying gas with respect to the gas injection nozzle 100 of a third inventive example illustrated in FIGS. 6A to 6C.

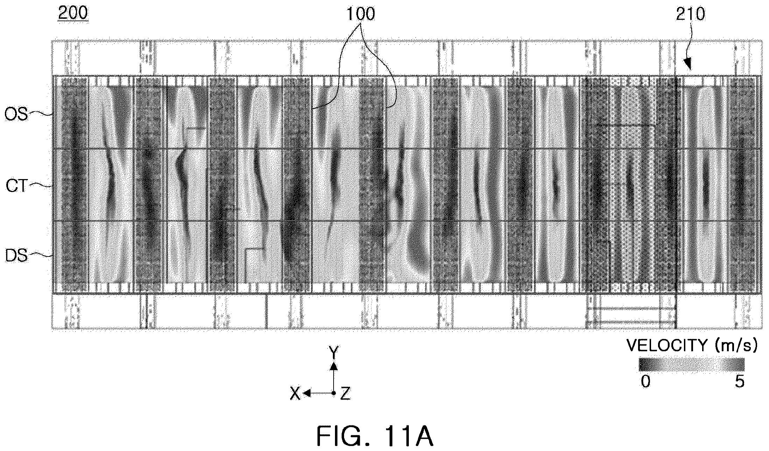

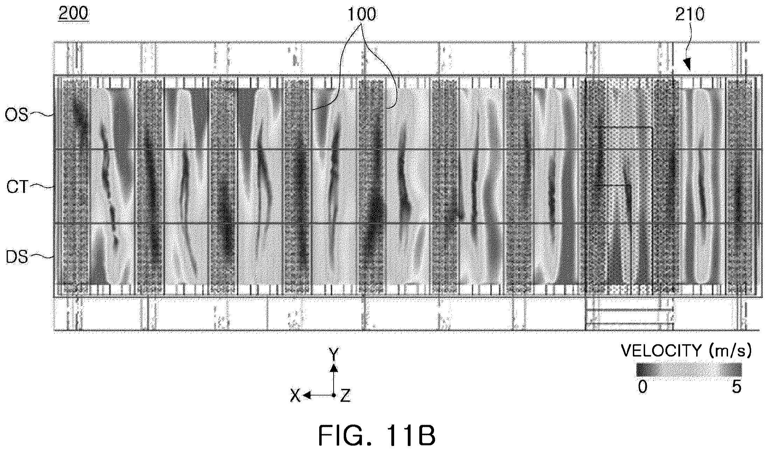

FIG. 11A is a view illustrating a simulation result of the flow of drying gas with respect to the gas injection nozzle 10 of the first comparative example illustrated in FIGS. 8A to 8C, and FIG. 11B is a view illustrating a simulation result of the flow of drying gas with respect to the gas injection nozzle 10 of the second comparative example illustrated in FIG. 9.

FIGS. 10A to 10C, 11A and 11B illustrate flow velocity of an upper side 5 mm away from a surface of an electrode plate when drying gas is injected from gas injection nozzles 100 and 10 disposed in first chambers 210 and 21. A region in which the flow velocity of drying gas is measured may be partitioned into a first part DS adjacent to first inlet ports 211 and 21a in the width direction (Y-direction) of an electrode plate, a second part CT disposed in a central portion of the electrode plate in the width direction (Y-direction), and a third part OS disposed away from the first inlet ports 211 and 21a.

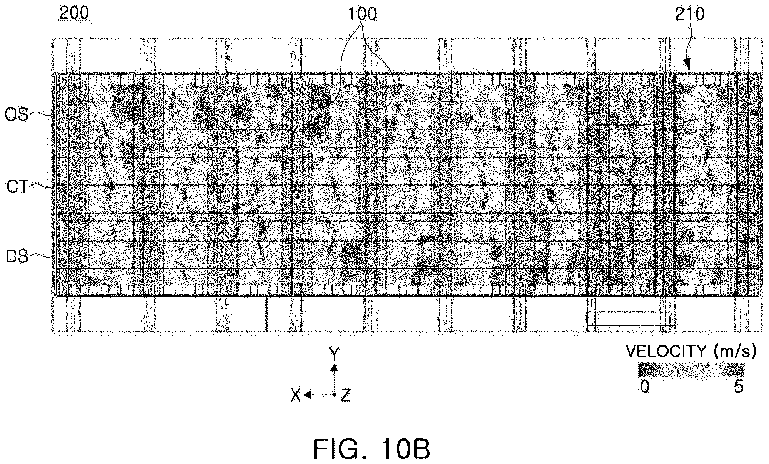

FIG. 10A is a simulation result for a first inventive example in which the gas injection nozzle 100 illustrated in FIGS. 3A and 3B is installed in the first chamber 210 of the drying apparatus 200 for an electrode plate illustrated in FIG. 1. FIG. 10B is a simulation result for a second inventive embodiment in which the gas injection nozzle 100 illustrated in FIGS. 5B and 5C is installed in the first chamber 210 of the drying apparatus 200 for an electrode plate illustrated in FIG. 5A. FIG. 10C is a simulation result for a third inventive example in which the gas injection nozzle 100 illustrated in FIGS. 6B and 6C is installed in the first chamber 210 of the drying apparatus 200 for an electrode plate illustrated in FIG. 6A.

FIG. 11A is a simulation result for the first comparative example in which the gas injection nozzle 10 illustrated in FIGS. 8B and 8C is installed in the first chamber 21 of the drying apparatus 20 for an electrode plate illustrated in FIG. 8A. FIG. 11B is a simulation result for the second comparative example in which the gas injection nozzle 10 illustrated in FIG. 9 is installed in a state in which the guide vane 22 is not disposed in the first chamber 21 of the drying apparatus 20 for an electrode plate illustrated in FIG. 8A. The first comparative example and the second comparative example have the same configuration of the gas injection nozzle 10, and are different only in whether or not the guide vane 22 is installed.

The inventive examples of FIGS. 10A to 10C and the comparative examples of FIGS. 11A and 11B were tested under the same conditions except for the structure of the gas injection nozzle.

In the examples of FIGS. 10A to 10C and the comparative examples of FIGS. 11A and 11B, a cross-sectional area of the first inlet ports 211 and 21a disposed in the first chambers 210 and 21 is 321,000 mm² (square millimeter), and an airflow rate thereof was 119 CMM (cubic meter minute) . The simulation was conducted under room temperature conditions. In the inventive examples of FIGS. 10A to 10C and the comparative examples of FIGS. 11A and 11B, a width WS of the electrode plate was approximately 1,500 mm, and 10 gas injection nozzles 100 and 10 were disposed in the first chambers 210 and 21.

In the second inventive example in FIG. 10B and the third inventive example in FIG. 10C, a width of slit in the dispersion hole 221 of the dispersion plate 220 was 4 mm, and a total cross-sectional area of the dispersion hole 221 was 132,000 mm² (square millimeter).

In the gas injection nozzle 100 of the first inventive example, the inlet hole 130 included one slit-shaped hole. A width of the slit of the inlet hole 130 was 4 mm, and a total cross-sectional area of the inlet hole 130 was approximately 5,950 mm². Diameters of each injection hole 140 was 10 mm, and a total cross-sectional area of the plurality of injection holes 140 was 53,780 mm² (square millimeter).

In the gas injection nozzle 100 of the second and third inventive examples, the inlet hole 130 included two slit-shaped holes. Widths of slits of each inlet hole 130 was 4 mm, and a total cross-sectional area of the inlet hole 130 was approximately 11,900 mm². Diameters of each injection hole 140 was 10 mm, and a total cross-sectional area of the plurality of injection holes 140 was 53,780 mm² (square millimeter).

In the first comparative example of FIG. 11A and the second comparative example of FIG. 11B, the same gas injection nozzle 10 was disposed. In each gas injection nozzle 10, diameters of each inlet hole 13 was 8 mm, and a total cross-sectional area of the plurality of inlet holes 13 was 36,850 mm² (square millimeter), and diameters of each injection hole 14 was 10 mm, and a total cross-sectional area of the plurality of injection holes 14 was 53,780 mm² (square millimeter).

In the case of the first and second comparative examples illustrated in FIGS. 11A and 11B, when viewed as a whole, the flow velocity of the second part CT disposed in a central portion of the electrode plate in the width direction (Y-direction) was low, while the flow velocity of the first part DS and the third part OS disposed at both sides of the electrode plate in the width direction (Y-direction) tended to be high. That is, in the case of the first and second comparative examples, a large velocity deviation occurred between the widthwise side parts DS and OS and the widthwise central portion CT of the electrode plate.

On the other hand, in the case of the first to third inventive examples illustrated in FIGS. 10A to 10C, when viewed as a whole, it may be confirmed that a velocity deviation between the second part CT disposed in the central portion of the electrode plate in the width direction (Y-direction) and the first and third parts DS and OS disposed on both sides of the electrode plate in the width direction (Y-direction) was reduced. In addition, it was confirmed that the velocity deviation between the first part DS and the third part OS disposed on both sides of the electrode plate in the width direction was reduced.

That is, in the case of the first to third inventive examples, it was confirmed that as compared to the first and second comparative examples, the velocity deviation of the widthwise side parts DS and OS and the widthwise central portion CT of the electrode plate tended to decrease as a whole.

Table 1 below illustrates average flow velocity and deviation for the first to third inventive examples and the first and second comparative examples. Table 1 illustrates results of quantifying the average flow velocity in the width direction of the electrode plate in an upper side 5 mm away from a surface of the electrode plate.

As may be seen in Table 1, in the case of the first to third inventive examples, it was confirmed that the flow velocity deviation in the width direction of the electrode plate was greatly reduced as compared to the first and second comparative examples, and the flow rate deviation was also reduced accordingly.

**Table 1:**

| DIVISION | | FIRST INVENTIVE EXAMPLE | SECOND INVENTIVE EXAMPLE | THIRD INVENTIVE EXAMPLE | FIRST COMPARATIV E EXAMPLE | SECOND COMPARATIV E EXAMPLE |
|---|---|---|---|---|---|---|
| UPPER PORTION 5 MM AWAY FROM SURFACE OF ELECTRODE PLATE | AVERAGE VELOCITY (m/s) | 2.95 | 2.45 | 2.46 | 2.05 | 2.07 |
| | STANDARD DEVIATION (m/s) | 1.08 | 0.83 | 0.84 | 1.00 | 1.00 |
| | STANDARD DEVIATION / AVERAGE | 0.37 | 0.34 | 034 | 0.49 | 0.49 |
| OS AVERAGE VELOCITY (m/s) | | 302 | 2_54 | 2.54 | 2.28 | 2.29 |
| CT AVERAGE VELOCITY (m/s) | | 2.73 | 2.33 | 2.32 | 1.77 | 1.81 |
| DS AVERAGE VELOCITY (m/s) | | 3.09 | 2.48 | 252 | 2.09 | 212 |
| OS-CT DEVIATION RATE (%) | | 10 | 8 | 9 | 22 | 21 |
| OS-DS DEVIATION RATE (%) | | 2 | 2 | 1 | 8 | 7 |

As described above, according to one embodiment of the present disclosure, the drying gas may be injected onto the electrode plate with little deviation in the flow rate and/or flow velocity in the width direction of the electrode plate. Accordingly, even for wide electrode plates, the occurrence of defects such as cracks and bending on both side parts of the electrode plate may be reduced, and even for wide electrode plates, the quality of the electrode plate may be improved.

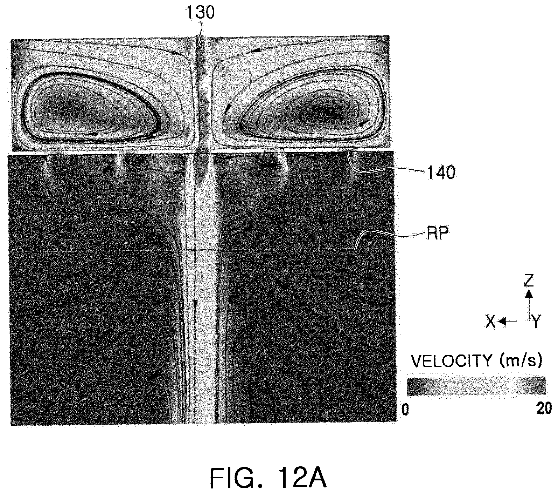

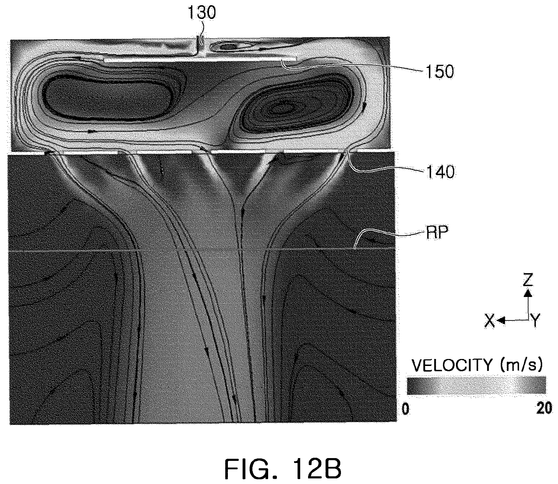

FIG. 12A is a view illustrating a simulation result of the flow of drying gas with respect to the gas injection nozzle 100 illustrated in FIGS. 3A and 3B, and FIG. 12B is a view illustrating a simulation result of the flow of drying gas with respect to the gas injection nozzle 100 illustrated in FIGS. 4A and 4B.

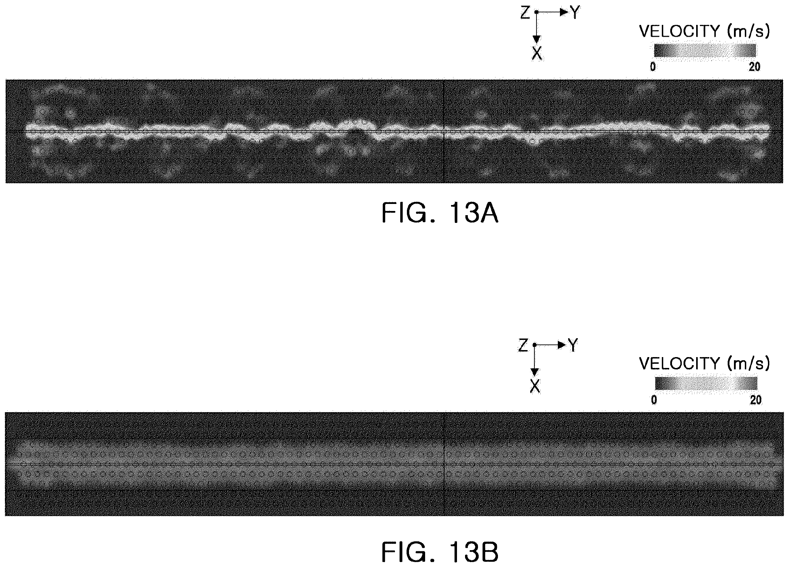

FIG. 13A is a view illustrating a result of simulating the flow of drying gas with respect to the gas injection nozzle 100 illustrated in FIGS. 3A and 3B in another direction, and FIG. 13B is a view illustrating a result of simulating the flow of drying gas with respect to the gas injection nozzle 100 illustrated in FIGS. 4A and 4B in another direction.

FIGS. 12A and 13A are flow simulation results of drying gas for one embodiment in which the deflector 150 is not disposed, and FIGS. 12B and 13B are flow simulation results of drying gas for one embodiment in which the deflector 150 is disposed.

As in the embodiment illustrated in FIGS. 12B and 13B, it may be confirmed that when the deflector 150 is disposed, the drying gas passing through the inlet hole 130 does not flow directly to the injection hole 140 but moves in the horizontal direction. Thus, the flow velocity decreased and the uniformity of the flow increased. Specifically, as compared to the case in which the deflector 150 is not disposed, in the case of adding the deflector 150, it was confirmed that the flow deviation is improved by approximately 30% or more and a maximum velocity is reduced approximately 70%.

The embodiments described above are merely an example of applying the principles of the present disclosure. Additionally, the above-described embodiments may be implemented by deleting some components, and each embodiment may be implemented in combination with each other. Furthermore, the embodiments may be combined to form additional embodiments.

## Claims

1. A gas injection nozzle (100) for drying an electrode plate, the gas injection nozzle comprising:
a nozzle body (110) having a flow space (120) through which drying gas flows, the flow space being formed between a first plate (111) and a second plate (112) spaced apart from the first plate (111) in a first direction;
at least one inlet hole (130) formed in the first plate (111) and configured to allow the drying gas to flow into the flow space (120) from the outside of the nozzle body (110); and
a plurality of injection holes (140) formed in the second plate (112) and configured to inject the drying gas from inside of the flow space (120) to the outside,
wherein the at least one inlet hole (130) has a slit shape crossing the first plate (111) in a second direction, which is a longitudinal direction of the nozzle body (110).

2. The gas injection nozzle (100) for drying an electrode plate of claim 1, further comprising:
a deflector (150) disposed between the first plate (111) and the second plate (112) and configured to change a flow direction of the drying gas introduced through the at least one inlet hole (130).

3. The gas injection nozzle (100) for drying an electrode plate of claim 2, wherein the deflector (150) has a shape crossing the nozzle body (110) in the second direction and is disposed in a position facing the at least one inlet hole (130) along the first direction.

4. The gas injection nozzle (100) for drying an electrode plate of claim 2 or 3, wherein a first height between the deflector (150) and the first plate (111) has a value equal to or less than a second height between the deflector (150) and the second plate (112).

5. The gas injection nozzle (100) for drying an electrode plate of any one of claims 2 to 4, wherein a first height between the deflector and the first plate has a value of 1/2 or less of the second height between the deflector and the second plate.

6. The gas injection nozzle (100) for drying an electrode plate of any one of claims 2 to 5, wherein a width of the deflector (150) has a value of 10% or more and 90% or less of a width of the first plate (111).

7. The gas injection nozzle (100) for drying an electrode plate of any one of the preceding claims, wherein the plurality of injection holes (140) have a circular shape.

8. A drying apparatus (200) for an electrode plate, comprising:
a chamber (210, 250) having a gas supply space (215, 235) through which drying gas for drying the electrode plate flows; and
a plurality of gas injection nozzles (100) according to any one of claims 1 to 7, coupled to the chamber (210, 250) to communicate with the gas supply space (215, 235) of the chamber (210, 250).

9. The drying apparatus (200) for an electrode plate of claim 8, wherein the plurality of gas injection nozzles (100) have a shape extending in a second direction, which corresponds to a width direction of the electrode plate, and are spaced apart from each other in a third direction, which is a transport direction of the electrode plate, and
the first direction, the second direction and the third direction are perpendicular to each other.

10. The drying apparatus (200) for an electrode plate of claim 8 or 9, wherein the chamber (210, 250) includes an inlet port (211, 231) configured to supply the drying gas to the gas supply space (215, 235) from the outside of the chamber (210, 250), and a dispersion plate (220) disposed between the inlet port (211, 231) and the first plate (111), and
the dispersion plate (220) includes a plurality of dispersion holes (221) configured to communicate with the drying gas between the inlet port (211, 231) and the inlet hole (130).

11. The drying apparatus (200) for an electrode plate of claim 10, wherein the inlet port (211, 231) is configured to supply the drying gas in the second direction, and
the plurality of dispersion holes (221) have a slit shape crossing the dispersion plate (220) in the third direction.

12. The drying apparatus (200) for an electrode plate of claim 10 or 11, wherein the inlet port (211, 231) is configured to supply the drying gas in the second direction, and
the plurality of dispersion holes (221) have a slit shape crossing the dispersion plate (220) in the second direction.

13. The drying apparatus (200) for an electrode plate of any one of claims 8 to 12, wherein the chamber (210, 250) includes a first chamber (210) in which drying gas injected onto a first surface of the electrode plate flows, and a second chamber (230) in which drying gas injected onto a second surface of the electrode plate flows, and
the plurality of gas injection nozzles (100) are installed in at least one of the first chamber (210) or the second chamber (230).

14. A system for drying an electrode, in particular for drying a cathode and/or an anode of a battery, the system comprising said electrode and the gas injection nozzle (100) according to any one of claims 1 to 7, or the drying apparatus (200) according to any one of claims 8 to 13.

15. A method for preparing a dried electrode plate, in particular for preparing a dried cathode and/or a dried anode of a battery, the method comprising:
providing an electrode plate (ES) to be dried,
using the gas injection nozzle (100) according to any one of claims 1 to 7, or the drying apparatus (200) according to any one of claims 8 to 13 to let drying gas flow for drying the electrode plate (ES).
